# EUROPÄISCHE PATENTANMELDUNG

(11) **EP 1 637 301 A2**
(43) Veröffentlichungstag der Anmeldung: **22.03.2006**
(21) Anmeldenummer: 05019071.9
(22) Anmeldetag: 02.09.2005
(51) Int. Cl.: B28B 3/22, B30B 11/24

(54) **Schneckenanordnung eines Extruders und Vakuumaggregat**

(30) Priorität: 15.09.2004 DE 102004045071
(71) Anmelder: HÄNDLE GmbH Maschinen und Anlagenbau, 75417 Mühlacker (DE); ECT GmbH, 75417 Mühlacker (DE)
(72) Erfinder: Lutz, Dietmar, 75417 Mühlacker (DE)
(74) Vertreter: Riedel, Peter

(57) **Zusammenfassung**

Die Erfindung betrifft eine Schneckenanordnung (1) eines Extruders (2), insbesondere zur Entgasung eines keramischen Massenstromes. Der Extruder (2) ist ausgangsseitig von einem Vakuumaggregat angeordnet. Die Schneckenanordnung (1) umfaßt eine Welle (3), auf der bezogen auf eine Förderrichtung (4) eingangsseitig eine schraubenförmige Schnecke (5) angeordnet ist, und auf der eine der Schnecke (5) nachgeschaltete Spitzkopfschnecke (6) vorgesehen ist. Die Spitzkopfschnecke (6) weist eingangsseitig zumindest abschnittsweise eine Umfangskontur (7) auf, die sich in der Förderrichtung (4) spiralig erweitert.

## Beschreibung

Die Erfindung betrifft eine Schneckenanordnung eines Extruders mit den Merkmalen nach dem Oberbegriff des Anspruchs 1 sowie ein Vakuumaggregat zur Entgasung eines keramischen Massenstromes mit einem entsprechenden Extruder.

Ein Vakuumaggregat zur Verpressung und Entgasung von keramischen Massen umfaßt in vorbekannter Bauweise einen Vormischer, einen in der Förderrichtung nachgeschalteten Extruder und eine zwischenliegende Vakuumkammer. Ein keramischer Massenstrom beispielsweise aus Ton zur Herstellung von Ziegeln oder dgl. wird mit einem sogenannten Vormischer in eine nachgeschaltete Vakuumkammer gefördert. Der Vormischer ist als Schneckenförderer ausgebaut, mit dem der keramische Massenstrom durchgemischt und kontinuierlich gefördert wird. Die kontinuierliche Förderung im Vormischer bewirkt eine eingangsseitige Abdichtung zwischen der Atmosphäre und der Vakuumkammer.

In der Vakuumkammer herrscht ein Vakuum mit einem typischen Restdruck von 40 bis 60 mb, das zur Entgasung bzw. Entlüftung des keramischen Massenstromes vorgesehen ist. Die infolge des einwirkenden Vakuums entlüftete keramische Masse fällt in die Schnecke eines nachgeschalteten Extruders und wird mit diesem durch eine Düse zur Weiterverarbeitung gepreßt.

Abhängig von der Zusammensetzung der keramischen Masse, der jeweils eingesetzten Düsengeometrie und den übrigen Förderbedingungen stellt sich stromauf der Düse ein Gegendruck ein, der innerhalb des Extruders eine gewisse sogenannte Rückstaulänge bewirkt. Innerhalb der Rückstaulänge steigt der Druck vom Vakuumrestdruck der Vakuumkammer auf den Gegendruck an. Der Beginn der Rückstaulänge wird Rückstaupunkt genannt. Die Rückstaulänge und damit die Lage des Rückstaupunktes sind abhängig von den jeweiligen Betriebsparametern variabel und insbesondere von dem veränderlichen Restdruck in der Vakuumkammer, der Zusammensetzung des keramischen Massenstromes, der Fördergeschwindigkeit sowie der Düsengeometrie, der Extrudergeometrie und der Oberflächenbeschaffenheit der Extruderschnecke abhängig.

Die Schneckenanordnung des Extruders ist zweigeteilt aufgebaut, wobei einer meist eingängigen Schnecke eine mehrgängige sogenannte Spitzkopfschnecke nachgeschaltet ist. Die Spitzkopfschnecke hat die Aufgabe, den eingängigen Massenstrang entsprechend der Gangzahl der Spitzkopfschnecke aufzuteilen, um die formgebende Düse mit gleichmäßig verdichtendem Ton oder dgl. möglichst homogen zu beschicken.

Für die gleichmäßige, homogene Düsenbeschickung ist eine präzise Abstimmung der Spitzkopfschneckengeometrie sowie deren relative Lage zur vorgeschalteten Schnecke erforderlich. Die gegenseitige Anpassung von Schnecke und Spitzkopfschnecke ist nur für einen engen Betriebsparameterbereich optimal einstellbar. Die zuvor beschriebene Variabilität der Betriebsparameter kann Anpassungsarbeiten bzw. den Austausch der Schnecke und insbesondere der Spitzkopfschnecke erforderlich machen.

Insbesondere kann eine nicht optimale Abstimmung der Spitzkopfschnecke auf die vorgeschaltete Förderschnecke dazu führen, daß die mehrgängige Spitzkopfschnecke den Massenstrom in ungleichmäßige Teilströme aufteilt, die sich in Druck und Konsistenz voneinander unterscheiden. Die einzelnen Gänge der Spitzkopfschnecke sind fluidisch dicht voneinander getrennt und verhindern untereinander einen Druckausgleich und damit eine Homogenisierung der einzelnen Teilströme. Zusätzlich ist zu beobachten, daß die Teilung des Massenstromes in Teilströme an den radial verlaufenden Eintrittskanten der Spitzkopfschnecke hohe Kräfte erzeugen und eine entsprechend hohe Antriebsleistung erfordern.

Der Erfindung liegt die Aufgabe zugrunde, die Homogenität eines keramischen Massenstromes insbesondere in einem Vakuumaggregat über einen erweiterten Betriebsparameterbereich sicherzustellen.

Die Aufgabe wird durch eine Schneckenanordnung mit den Merkmalen des Anspruchs 1 sowie durch ein Vakuumaggregat mit den Merkmalen des Anspruchs 8 gelöst.

Es wird eine Schneckenanordnung eines Extruders auf der Ausgangsseite eines Vakuumaggregates sowie ein Vakuumaggregat zur Entgasung eines keramischen Massenstromes mit einer entsprechenden Schneckenanordnung vorgeschlagen, wobei die Spitzkopfschnecke der Schneckenanordnung eingangsseitig zumindest abschnittsweise eine Umfangskontur aufweist, die sich in der Förderrichtung spiralig erweitert. Insbesondere geht dabei die Umfangskontur der Spitzkopfschnecke von einer Umfangsfläche einer zugehörigen Welle aus und erweitert sich von dort aus spiralförmig. Die spiralige Umfangskontur der Spitzkopfschnecke weist einen in der Förderrichtung kontinuierlich bis auf zumindest näherungsweise Null bzw. auf einen Restspalt sich verringernden radialen Abstand zu einer Umfangswand des umschließenden Extrudergehäuses auf. Der spiralige Schneckenteil führt über dessen Längenabschnitt eine kontinuierlich sich steigernde Teilung und Vergleichmäßigung des Massenstromes aus. Die einzelnen Teilströme sind entlang des spiraligen Abschnittes nicht vollständig voneinander getrennt. Druckunterschiede zwischen den einzelnen Teilströmen können sich durch den radialen Abstand zwischen der spiraligen Schneckenkontur und der Umfangswand des Extrudergehäuses ausgleichen. Die einzelnen Teilströme sind in Druck und Konsistenz auch bei wechselnden Betriebsparametern vergleichmäßigt. Die nachgeschaltete Düse wird über einen erweiterten Betriebsparameterbereich mit einem keramischen Massenstrom von verbesserter Homogenität beschickt.

Gleichzeitig bewirkt die spiralige Flügelgeometrie der Spitzkopfschnecke infolge ihrer schrägwinkligen Eintrittskante ein weicheres Einschneiden in den Massestrang. Es ist eine verringerte Antriebsleistung erforderlich.

In vorteilhafter Weiterbildung folgt auf die spiralige Umfangskontur der Spitzkopfschnecke in Förderrichtung eine zylindrische Umfangskontur. Die zylindrische Umfangskontur erstreckt sich zweckmäßig über einen Umfangswinkel in einem Bereich zwischen einschließlich etwa 30° und einschließlich etwa 80°, vorteilhaft zwischen einschließlich 45° und einschließlich 60°. Der Bereich der zylindrischen Umfangskontur grenzt zumindest näherungsweise dichtend innenseitig an die Umfangswand des Extrudergehäuses, wodurch sich der Förderdruck des Extruders gegen den Rückstaudruck der Düse aufbauen kann. Der vorgenannte Winkelbereich hat sich als zweckmäßiger Kompromiß zwischen hinreichender Abdichtung im Endbereich und der Druckausgleichsmöglichkeit im spiraligen Bereich herausgestellt.

In einer vorteilhaften Ausführung erstreckt sich die Spitzkopfschnecke in axialer Richtung über einen zylindrischen Abschnitt und einen sich daran anschließenden, insbesondere konisch verjüngten Abschnitt der Schneckenwelle. Entlang des zylindrischen Wellenabschnittes können sich gleichmäßige Druckverhältnisse ausbilden. Der anschließend konisch verjüngte Abschnitt führt die Teilmassenströme radial nach innen, zumindest näherungsweise bis zur Drehachse. In der Folge stellt sich ausgangsseitig der Spitzkopfschnecke über den gesamten Querschnitt einschließlich des radial inneren Bereiches ein gleichmäßiger Massenstrom ein.

In einer zweckmäßigen Weiterbildung ist die eingangsseitig der Spitzkopfschnecke angeordnete Schnecke über einen begrenzten Axialabschnitt gelocht. Vorteilhaft liegt der gelochte Axialabschnitt im Bereich des Rückstaupunktes und erstreckt sich insbesondere stromauf des Rückstaupunktes über einen Homogenisierungsabschnitt. Restluft im keramischen Massenstrom, die durch das Vakuum in der Vakuumkammer nicht entfernt wurde und zunächst noch einen Restdruck von beispielsweise 40 mb aufweist, steigt in ihrem Druck infolge des Verdichtungsvorganges im Extruder an. Durch die bevorzugte Lage des gelochten Abschnittes kann bei einem Druckanstieg auf beispielsweise 100 bis 200 mb ein Druckausgleich durch die entsprechenden Löcher erfolgen. Dieser Druckausgleich findet in erwünschter Weise in jeder Drehwinkelstellung der Schnecke statt. Die Lochung der Schnecke mit ringsum geschlossenen Löchern bewirkt, daß die Umfangskontur der Schnecke durchgängig verläuft. Die Schnecke hat am Umfang keine Unterbrechungen und hält die Innenwand des Extrudergehäuses frei von Ablagerungen. Zusätzlich ist zu beobachten, daß zusammen mit der infolge des Druckausgleiches rückströmenden Luft auch ein prozentualer Anteil der keramischen Masse zurückströmt und damit in erwünschter Weise zur Homogenisierung beiträgt. Insgesamt ist mit der vorgeschlagenen gelochten Ausführung gewährleistet, daß auch bei veränderlicher Lage des Rückstaupunktes der Druckanstieg durch die Verdichtung ausgeglichen und Restluft rückgeführt werden kann.

Ausführungsbeispiele der Erfindung sind im folgenden anhand der Zeichnung näher beschrieben. Es zeigen:
- Fig. 1: in einer geschnittenen Seitenansicht die wesentlichen Komponenten eines erfindungsgemäßen Vakuumaggregates;
- Fig. 2: in einer vergrößerten Einzelansicht die Schneckenanordnung nach Fig. 1;
- Fig. 3: in einer Stirnansicht die zweigängige Schneckenanordnung nach Fig. 2 in einem Schnitt entlang der dort gezeigten Linie III-III;
- Fig. 4: eine Stirnansicht einer eingängigen Spitzkopfschneckenanordnung;
- Fig.5: eine Variante der Anordnung nach den Fig. 3 und 4 mit einer dreigängigen Spitzkopfschnecke.

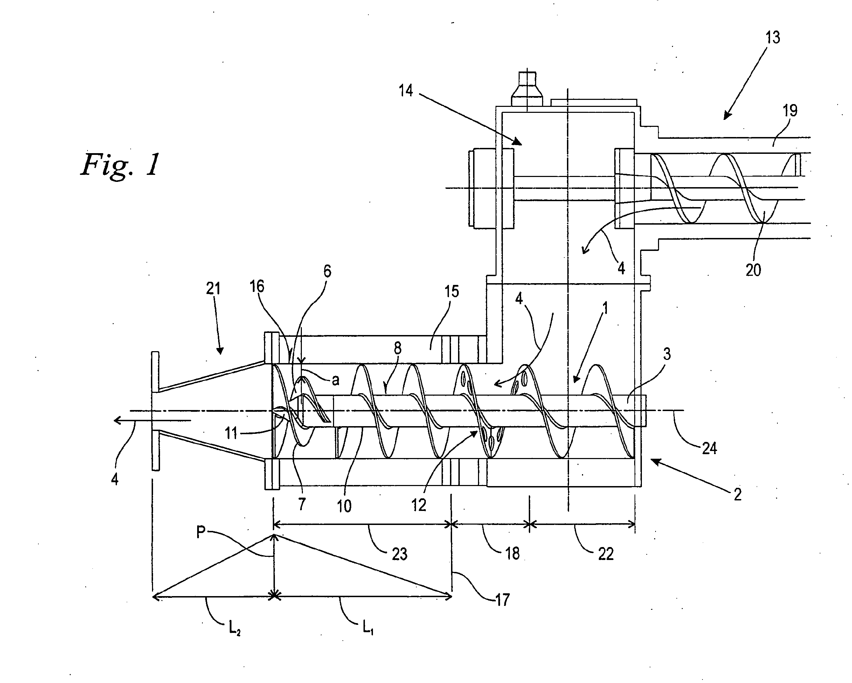

Fig. 1 zeigt als schematische Schnittdarstellung in Seitenansicht ein Vakuumaggregat zur Entgasung eines keramischen Massenstromes bespielsweise in Form von Ton zur Ziegelherstellung oder dergleichen. Das Vakuumaggregat umfaßt einen Vormischer 13, eine Vakuumkammer 14 sowie einen Extruder 2. Das Vakuumaggregat wird in einer durch einen Pfeil 4 angedeuteten Förderrichtung von dem zu entgasenden bzw. entlüftenden keramischen Massenstrom durchströmt. Eingangsseitig des Vakuumaggregates ist dazu ein Gehäuse 19 des Vormischers 13 vorgesehen, in dem eine Schnecke 20 drehend antreibbar gelagert ist.

Mittels der Schnecke 20 des Vormischers 13 wird der keramische Massenstrom in der Förderrichtung 4 in die Vakuumkammer 14 gefördert und dabei eingangsseitig der Vakuumkammer 14 fein geschnitzelt. Die Vakuumkammer 14 ist eingangsseitig durch den Vormischer 13 und der darin befindlichen kontinuierlich geförderten keramischen Masse druckdicht gegen die atmosphärische Umgebung verschlossen. Der Vormischer 13 ist beispielhaft in einer horizontalen Lage gezeigt. Er kann auch vertikal oder in einer schrägwinkligen Position angeordnet sein.

Ausgangsseitig der Vakuumkammer 14 ist der Extruder 2 vorgesehen, in dessen Extrudergehäuse 15 eine Schneckenanordnung 1 drehend antreibbar gelagert ist. Auch die Schneckenanordnung 1 bzw. das Extrudergehäuse 15 wird in der Förderrichtung 4 vom keramischen Massenstrom durchströmt, wobei die Vakuumkammer 14 ausgangsseitig durch die Schneckenanordnung 1, den kontinuierlichen keramischen Massenstrom und das Extrudergehäuse 15 druckdicht gegenüber der atmosphärischen Umgebung verschlossen ist.

Innerhalb der Vakuumkammer 14 herrscht ein Vakuum mit einem geringen Restdruck von beispielsweise 40 bis 60 mb. Das Vakuum bewirkt eine zumindest teilweise Entlüftung bzw. Entgasung des keramischen Massenstromes. Das entlüftete keramische Material fällt in die Schneckenanordnung 1 und wird infolge ihrer Drehung um eine Drehachse 24 durch eine nachgeschaltete Düse 21 in der Förderrichtung 4 gepreßt. Die Schneckenanordnung 1 ist dazu in der durch die Förderrichtung 4 vorgegebenen Reihenfolge in einen Transportabschnitt 22, einen Homogenisierungsabschnitt 18 und einen nachfolgenden Verdichtungsabschnitt 23 aufgeteilt. Beim Durchströmen der Düse 21 baut sich über deren Düsenlänge L₂ ein Gegendruck P auf, der am ausgangsseitigen Ende der Schneckenanordnung 1 wirkt. Der Gegendruck P, die Geometrie- und Betriebsparameter des Extruders 2 sowie die fluidischen Eigenschaften des keramischen Massenstromes geben entlang der Schneckenanordnung 1 eine Rückstaulänge L₁ vor, die die Länge des Verdichtungsabschnittes 23 bestimmt. Der Beginn des Verdichtungsabschnittes 23 ist als Rückstaupunkt 17 bezeichnet.

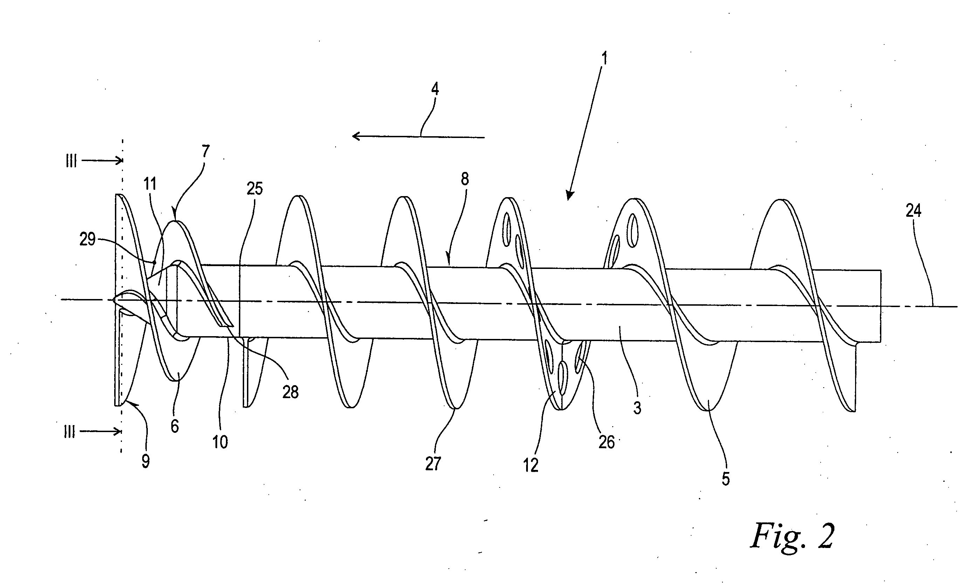

Der keramische Massenstrom fällt aus der Vakuumkammer 14 infolge der Schwerkraft nach unten in den Transportabschnitt 22 und wird von dort zunächst in den Homogenisierungsabschnitt 18 gefördert. Eine auf einer Welle 3 der Schneckenanordnung 1 angeordnete Schnecke 5, die sich über den Transportabschnitt 22, den Homogenisierungsabschnitt 18 und einen Teil des Verdichtungsabschnittes 23 erstreckt, weist im Bereich des Rückstaupunktes 17 und in dem stromauf davon liegenden Homogenisierungsabschnitt 18 einen gelochten Axialabschnitt 12 auf. Der gelochte Axialabschnitt 12 ist im einzelnen im Zusammenhang mit Fig. 2 näher beschrieben. Die Erstreckung des gelochten Axialabschnittes 12 ist in Lage und Länge derart bemessen, daß er verschiedene Positionen des Rückstaupunktes 17 abhängig von veränderlichen Betriebsparametern übergreift. Im Bereich des gelochten Axialabschnittes 12 stellt sich entlang der Förderrichtung 4 ein geringer Druckzuwachs auf beispielsweise 100 bis 200 mb ein. Innerhalb des gelochten Axialabschnittes 12 können restliche Gasmengen im keramischen Massenstrom gegen die Förderrichtung 4 in die Vakuumkammer 14 zur Entlüftung zurückströmen. Der ansteigende Gasdruck bewirkt dabei neben der Gasrückströmung auch eine teilweise Rückströmung des keramischen Massenstromes zur Verbesserung seiner Durchmischung.

Die Schnecke 5 weist eine in Fig. 2 gezeigte zylindrische Umfangskontur 27 auf, die mit geringem Spiel im zylindrischen Extrudergehäuse 15 liegt. In dem geringen radialen Spiel von beispielsweise 1 mm bis 5 mm setzt sich keramische Masse ab und dichtet die Schnecke 5 gegen das Extrudergehäuse 15 ab. In dem stromab des gelochten Axialabschnittes 12 liegenden Abschnitt baut sich infolge der Dichtwirkung ein Druck im Massenstrom auf.

Der eingängig ausgeführten eingangsseitigen Schnecke 5 ist ausgangsseitig eine zweigängige Spitzkopfschnecke 6 nachgeschaltet. Die Länge des auf den gelochten Axialabschnitt 12 folgenden Abschnittes der eingangsseitigen Schnecke 5 und die axiale Länge der Spitzkopfschnecke 6 entsprechen zusammen in etwa der Länge L₁ des Verdichtungsabschnittes 23, über die sich schematisch dargestellt der Druck im Massenstrom kontinuierlich aufbaut, bis er am ausgangsseitigen Ende der Spitzkopfschnecke den Gegendruck P erreicht hat. Von dort fällt der Druck über die Düsenlänge L₂ der Düse 21 bis auf den nachfolgenden Umgebungsdruck ab.

Die eingangsseitige Schnecke 5 und die nachgeschaltete Spitzkopfschnecke 6 liegen auf einer gemeinsamen Welle 3, die in axialer Richtung in einen zylindrischen Abschnitt 10 und einen sich daran anschließenden verjüngten Abschnitt 11 aufgeteilt ist. Der verjüngte Abschnitt 11 ist im gezeigten Ausführungsbeispiel konisch ausgeführt, kann jedoch bedarfsweise auch eine andere, sich in der Förderrichtung 4 verjüngende Kontur aufweisen. Die Schnecke 5 umschließt die Welle 3 in deren zylindrischem Abschnitt 10. Die Spitzkopfschnecke 6 erstreckt sich in axialer Richtung über ein Endteil des zylindrischen Abschnittes 10 sowie über den sich daran anschließenden verjüngten Abschnitt 11.

Die Spitzkopfschnecke 6 ist bezogen auf die Förderrichtung 4 eingangsseitig über den größeren Teil ihrer Axialerstreckung mit einer Umfangskontur 7 versehen, die sich in der Förderrichtung 4 spiralig erweitert. Die spiralige Umfangskontur 7 liegt dazu in einem radialen Abstand a zu einer innenseitigen Umfangswand 16 des Extrudergehäuses 15. Die Umfangswand 16 ist über die Länge des Extrudergehäuses 15 im wesentlichen zylindrisch ausgebildet, wobei infolge der spiraligen Ausbildung der Umfangskontur 7 der radiale Abstand a zwischen der Umfangskontur 7 und der Umfangswand 16 bezogen auf die Förderrichtung 4 sich kontinuierlich bis zumindest näherungsweise auf Null verringert. Der radiale Abstand a erlaubt einen Druckausgleich, gegebenenfalls verbunden mit einem Massenstromausgleich, zwischen den einzelnen Teilströmen innerhalb der Spitzkopfschnecke 6.

Fig. 2 zeigt in einer vergrößerten Detailansicht Einzelheiten der Schneckenanordnung 1 nach Fig. 1. Es ist zu erkennen, daß der gelochte Axialabschnitt 12 durch eine Anzahl von kreisrunden, ringsum geschlossenen Löchern 26 gebildet ist. Anstelle der kreisrunden Lochform kann auch eine andere, beispielsweise ovale oder eckige Lochform mit geschlossener Lochkontur gewählt werden. Eine zylindrische Umfangskontur 27 der Schnecke 5 ist insgesamt ununterbrochen und auch in dem gelochten Axialabschnitt 12 nicht durch die Löcher 26 gestört. Der gelochte Axialabschnitt 12 erstreckt sich im gezeigten Ausführungsbeispiel über eine axiale Länge, die einer 360°-Drehung der schraubenförmigen Schnecke 5 entspricht.

Bezogen auf die Förderrichtung 4 liegt stromab der eingangsseitigen Schnecke 5 die Spitzkopfschnecke 6, die sich über den Endteil des zylindrischen Abschnittes 10 sowie über den nachgeschalteten, konisch verjüngten Abschnitt 11 erstreckt. Bezogen auf die Förderrichtung 4 ist ein Anfangspunkt 28 und ein Endpunkt 29 definiert, zwischen denen sich die Umfangskontur 7 der Spitzkopfschnecke 6 spiralig erweitert. Am Anfangspunkt 28 stößt die Umfangskontur 7 auf eine Umfangsfläche 8 der Welle 3 und verläuft von dort aus in Richtung des Endpunktes 29 mit einem kontinuierlich sich vergrößernden Radius derart, daß die Umfangskontur 7 im Endpunkt 29 den Radius der Umfangswand 16 (Fig. 1) zumindest näherungsweise erreicht hat. Auf die spiralige Umfangskontur 7 folgt in der Förderrichtung 4 ab dem Endpunkt 29 eine zylindrische Umfangskontur 9 der Spitzkopfschnecke 6 mit konstantem Außendurchmesser, der dem Innendurchmesser der Umfangswand 16 (Fig. 1) entspricht.

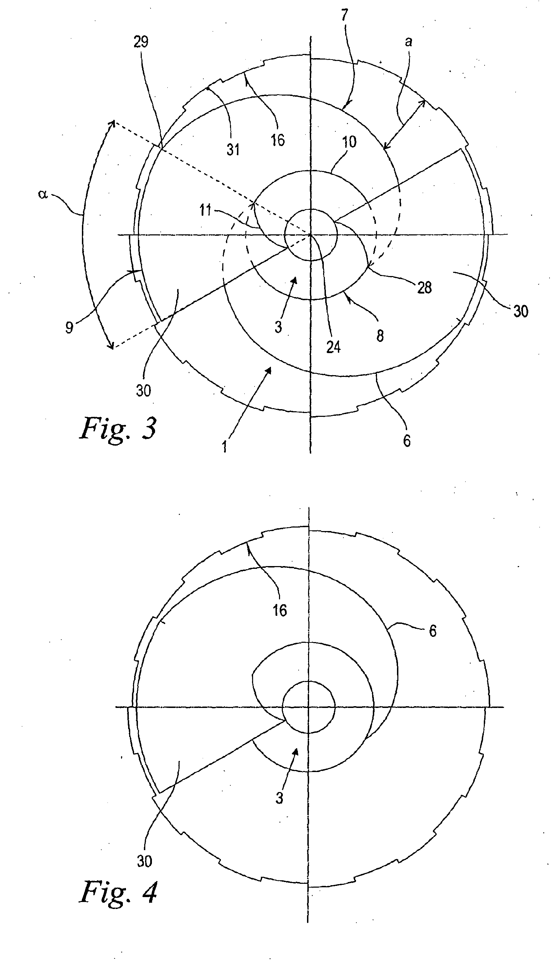

Fig. 3 zeigt eine geschnittene Frontansicht der Anordnung nach Fig. 2 entlang der dort dargestellten Linie III-III. Demnach ist die Spitzkopfschnecke 6 als zweigängige Schnecke mit zwei gleich ausgebildeten und um 180° gegeneinander versetzten Wendeln 30 ausgeführt. Es ist deutlich zu erkennen, daß die spiralige Umfangskontur 7 vom Anfangspunkt 28 auf der Umfangsfläche 8 der Welle 3 bis zum Endpunkt 29 einen kontinuierlich anwachsenden Radius aufweist, wobei ihr Abstand a zur Umfangswand 16 sich im gleichen Maße verringert. Die Umfangskontur 7 ist im gezeigten Ausführungsbeispiel als archimedische Spirale ausgeführt, deren Radius bezogen auf die Drehachse 24 proportional zum Drehwinkel ansteigt. Es kann auch zweckmäßig sein, daß ein abweichender spiraliger Konturverlauf gewählt wird, wobei der Anfangspunkt 28 auch einen gewissen radialen Abstand zur Umfangsfläche 8 der Welle 3 aufweisen kann.

An die spiralige Umfangskontur 7 schließt sich eine zylindrische Umfangskontur 9 der Wendel 30 an, deren Außendurchmesser zumindest näherungsweise dem Innendurchmesser der Umfangswand 16 entspricht. Die zylindrische Umfangskontur 9 erstreckt sich im gezeigten Ausführungsbeispiel über einen Umfangswinkel α von 45°. Ihr Winkelbereich kann vorteilhaft zwischen einschließlich etwa 30° und einschließlich etwa 80° und insbesondere zwischen einschließlich 45° und einschließlich 60° liegen.

Der Darstellung nach Fig. 3 ist noch zu entnehmen, daß in die Umfangswand 16 radial vertiefte Längsnuten 31 eingearbeitet sind, die eine Haftung des keramischen Massenstromes in Umfangsrichtung bewirken. Ein Mitdrehen des keramischen Massenstromes mit der Drehbewegung der Schneckenanordnung 1 ist dadurch vermeidbar.

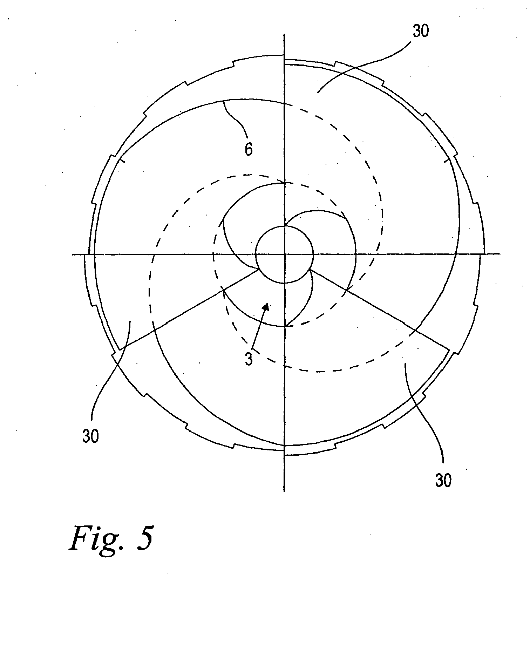

Fig. 4 zeigt eine Variante der Anordnung nach Fig. 3, bei der die Spitzkopfschnecke 6 eingängig mit nur einer auf der Welle 3 angeordneten Wendel 30 ausgeführt ist, die sich spiralig an die Umfangswand 16 annähert. Eine weitere Ausführungsvariante zeigt Fig. 5, bei der insgesamt drei um 120° gegeneinander versetzte Wendeln 30 auf der Welle 3 angeordnet sind und eine dreigängige Spitzkopfschnecke 6 bilden. In den übrigen Merkmalen und Bezugseichen stimmen die Anordnungen nach den Fig. 4 und 5 untereinander und mit der Anordnung nach Fig. 3 überein.

## Patentansprüche

1. Schneckenanordnung (1) eines Extruders (2), insbesondere zur Entgasung eines keramischen Massenstromes, umfassend eine Welle (3), auf der bezogen auf eine Förderrichtung (4) eingangsseitig eine schraubenförmige Schnecke (5) angeordnet ist, und auf der eine der Schnecke (5) nachgeschaltete Spitzkopfschnecke (6) vorgesehen ist,
**dadurch gekennzeichnet, daß** die Spitzkopfschnecke (6) eingangsseitig zumindest abschnittsweise eine Umfangskontur (7) aufweist, die sich in der Förderrichtung (4) spiralig erweitert.

2. Schneckenanordnung nach Anspruch 1,
**dadurch gekennzeichnet, daß** die Umfangskontur (7) der Spitzkopfschnecke (6) von einer Umfangsfläche (8) der Welle (3) ausgeht und von dort aus sich spiralig erweitert.

3. Schneckenanordnung nach Anspruch 1 oder 2,
**dadurch gekennzeichnet, daß** auf die spiralige Umfangskontur (7) in Förderrichtung (4) eine zylindrische Umfangskontur (9) der Spitzkopfschnecke (6) folgt.

4. Schneckenanordnung nach Anspruch 3,
**dadurch gekennzeichnet, daß** sich die zylindrische Umfangskontur (9) über einen Umfangswinkel (α) in einem Bereich zwischen einschließlich etwa 30° und einschließlich etwa 80° erstreckt.

5. Schneckenanordnung nach Anspruch 4,
**dadurch gekennzeichnet, daß** der Winkel (α) in einem Bereich zwischen einschließlich 45° und einschließlich 60° liegt.

6. Schneckenanordnung nach einem der Ansprüche 1 bis 5,
**dadurch gekennzeichnet, daß** sich die Spitzkopfschnecke (6) in axialer Richtung über einen zylindrischen Abschnitt (10) und einen sich daran anschließenden, insbesondere konisch verjüngten Abschnitt (11) der Welle (3) erstreckt.

7. Schneckenanordnung nach einem der Ansprüche 1 bis 6,
**dadurch gekennzeichnet, daß** die eingangsseitige Schnecke (5) über einen begrenzten Axialabschnitt (12) gelocht ist.

8. Vakuumaggregat zur Entgasung eines keramischen Massenstromes, umfassend einen Vormischer (13), einen in der Förderrichtung nachgeschalteten Extruder (2) und eine zwischenliegende Vakuumkammer (14), wobei in einem Extrudergehäuse (15) des Extruders (2) eine Schneckenanordnung (1) mit den Merkmalen nach einem der Ansprüche 1 bis 7 angeordnet ist.

9. Vakuumaggregat nach Anspruch 8,
**dadurch gekennzeichnet, daß** die spiralige Umfangskontur (7) der Spitzkopfschnecke (6) einen in der Förderrichtung (4) kontinuierlich sich verringernden radialen Abstand (a) zu einer Umfangswand (16) des Extrudergehäuses (15) aufweist.

10. Vakuumaggregat nach Anspruch 8 oder 9,
**dadurch gekennzeichnet, daß** der gelochte Axialabschnitt (12) der eingangsseitigen Schnecke (5) im Bereich eines Rückstaupunktes (17) liegt.

11. Vakuumaggregat nach Anspruch 10,
**dadurch gekennzeichnet, daß** sich der gelochte Axialabschnitt (12) stromauf des Rückstaupunktes (17) über einen Homogenisierungsabschnitt (18) erstreckt.
